(19)

Europäisches
Patentamt
European
Patent Office
Office européen
des brevets

(11) **EP 1 831 672 B1**

(12) **EUROPEAN PATENT SPECIFICATION**

(45) Date of publication and mention
of the grant of the patent:
**22.10.2008 Bulletin 2008/43**

(51) Int Cl.:
***G01N 21/64*** (2006.01)

(21) Application number: **05850861.5**

(86) International application number:
**PCT/IB2005/054207**

(22) Date of filing: **13.12.2005**

(87) International publication number:
**WO 2006/064465 (22.06.2006 Gazette 2006/25)**

(54) **MULTI-SPOT INVESTIGATION APPARATUS**

MEHRPUNKTUNTERSUCHUNGSGERÄT

APPAREIL DE RECHERCHE DE TACHES MULTIPLES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **17.12.2004 EP 04106680**

(43) Date of publication of application:
**12.09.2007 Bulletin 2007/37**

(73) Proprietor: **Koninklijke Philips Electronics N.V.
5621 BA Eindhoven (NL)**

(72) Inventors:
• **KLUNDER, Derk Jan Wilfred
c/o Philips I.P. & Standards GmbH
52066 Aachen (DE)**
• **VAN HERPEN, Maarten,
c/o Philips I.P. & Standards GmbH
52066 Aachen (DE)**
• **BALISTRERI, Marcello,
c/o Philips I.P. & Standards GmbH
52066 Aachen (DE)**
• **PRINS, Menno
c/o Philips I.P. & Standards GmbH
52066 Aachen (DE)**

(74) Representative: **Schouten, Marcus Maria
Philips
Intellectual Property & Standards
P.O. Box 220
5600 AE Eindhoven (NL)**

(56) References cited:
**EP-A- 1 283 416          WO-A-94/27137
WO-A-97/34171          WO-A-20/06038149**

• **LOHMANN A W ET AL: "Making an array
illuminator based on the Talbot effect" APPLIED
OPTICS, OSA, OPTICAL SOCIETY OF AMERICA,
WASHINGTON, DC, US, vol. 29, no. 29, 10 October
1990 (1990-10-10), pages 4337-4340,
XP002314360 ISSN: 0003-6935**
• **MASHANOV G I ET AL: "Visualizing single
molecules inside living cells using total internal
reflection fluorescence microscopy" METHODS :
A COMPANION TO METHODS IN ENZYMOLOGY,
ACADEMIC PRESS INC., NEW YORK, NY, US, vol.
29, no. 2, February 2003 (2003-02), pages 142-152,
XP002372586 ISSN: 1046-2023**

**Description**

The invention relates to a method and an apparatus for the investigation of a sample material with an array of light spots.

From the WO 02/097406 A1 an apparatus for the investigation of biological sample material is known wherein a laser beam is split into a plurality of excitation beams by a diffractive device. The excitation beams are guided to a platform storing the sample material, where fluorescence is stimulated by an array of sample light spots. Said fluorescence is measured spatially resolved with a CCD array in order to gain information on the presence and/or amount of sample material.

The EP 1 283 416 A2 discloses a fluorometric imaging apparatus comprising a microlens array for generating an array of light spots in a specimen. The fluorescence that is stimulated in these light spots is measured, and input light is additionally mapped in forward direction onto a detector like a CCD camera.

A microscopy and lithography system that uses a microlens array for the generation of light spots is also disclosed in the WO 97/34171.

The WO 94/27137 discloses an apparatus with a planar waveguide that is laterally illuminated. A fluorescent sample on the surface of the waveguide is stimulated by evanescent light waves in an array of patches, and the resulting fluorescence is detected for example with a CCD array.

In LOHMANN et al. (APPLIED OPTICS 29 (1990), 4337-4340), the generation of a multi-spot array via the Talbot effect is disclosed, and MASHANOV et al. (METHODS 29 (2003), 142-152) describe a setup for visualizing single molecules inside living cells, wherein fluorescence is stimulated by evanescent waves.

Based on this situation it was an object of the present invention to provide means for a more precise investigation of a sample material with light.

This object is achieved by an apparatus according to claim 1 and a method according to claim 12. Preferred embodiments are disclosed in the dependent claims.

According to its first aspect, the invention comprises an apparatus for the treatment of a sample material with light. As the treatment may particularly serve for investigating the sample material, the apparatus will also be called "investigation apparatus" in the following without limiting the scope of the invention. Moreover, the term "sample material" is to be understood in a very general sense, comprising for instance chemical elements, chemical compounds, biological material (e.g. cells), and/or mixtures thereof. The apparatus comprises the following components:

a) A storage unit that allows the passage of light in at least one direction. Thus "input light" entering the storage unit through one surface region will at least partially be able to leave the unit through another surface region, wherein the input light may potentially be refracted and/or reflected within the storage unit. The storage unit further comprises a sample chamber that may be provided with the sample material to be treated during the use of the apparatus. The sample chamber may have an arbitrary shape and comprise for example a division into compartments. Typically it is an empty cavity that may be filled with the sample material, for example an aqueous solution of biological molecules. In certain embodiments, the sample layer may also comprise probes, i.e. sites (molecules) which may bind the sample material.

b) An illumination system for generating so-called "input light" and, with this input light, an array of "sample light spots" in the sample chamber of the storage unit, particularly within a more or less thin "sample layer" of the sample chamber which may for example be located adjacent to one of the surfaces of the sample chamber.

c) A "reference detector" for measuring input light that has propagated beyond the sample light spots, i.e. input light that passes through the storage unit.

d) A "signal detector" for measuring "signal light" that is by definition generated in the sample chamber. Said signal light will typically be generated by the sample material, particularly as fluorescence stimulated by the input light.

An investigation apparatus of the aforementioned kind has two main advantages: First, the sample material in the sample chamber is investigated at a plurality of (sample) light spots simultaneously, wherein the processes take place in each spot separately. This parallelism speeds up the whole treatment procedure, allows to measure multiple analytes simultaneously, and improves the accuracy due to a better signal-to-noise ratio. A second advantage is that both input light passing the sample light spots and signal light from the sample chamber are measured; thus information contained in these two measurements can be combined to find out correlations. In the case of fluorescence, the amount of (fluorescent) signal light for example depends on both the amount of stimulating input light and the amount of fluorophores. Knowing the amount of input light at a particular sample light spot by the reference measurement therefore allows a more precise determination of the amount of fluorophores (which typically is of interest for the investigator).

According to a preferred embodiment, the storage unit comprises a transparent carrier plate and a transparent cover plate which enclose the sample chamber. The two plates typically consist of glass or a transparent polymer.

The illumination system that generates the sample light spots in the sample chamber can be realized in many different ways. In a preferred embodiment, the illumination system first comprises a multi-spot generator (abbreviated MSG in the following) for the generation of "input light". Said input light is provided at the output side of the MSG as an array of light spots, which will be called "source light spots" in the following to distinguish them from other types of light spots. The array may have a regular arrangement of source light spots, e.g. as a rectangular matrix. Moreover, the source light spots may particularly all have (approximately) the same shape and intensity. The illumination system secondly comprises a transmission section for the transmission of input light from the source light spots of the MSG to the storage unit and, finally, to the sample light spots. Several realizations for the MSG and the transmission section will be discussed below in connection with preferred embodiments of the invention.

The signal detector that measures signal light coming from the sample chamber is preferably disposed outside the optical path of the input light. Because input light cannot directly reach the signal detector in this case, the signal light can be measured undisturbed and the signal-to-noise ratio is improved. A maximal shielding of the signal detector from the input light is achieved if it is disposed perpendicular to the propagation direction of the input light.

As was already mentioned, the apparatus described above may be applied for any desired kind of treatment of the sample material by light spots. Thus it may for example be used to initiate certain chemical reactions of the sample material in the sample light spots. In another, very important class of applications the objective is to detect, monitor and/or measure signals coming from the sample layer, particularly to measure fluorescence that was stimulated by the sample light spots. For these applications the apparatus comprises the at least one signal detector which may for example be realized by photo multiplier tubes. Preferably the signal detector and/or the reference detector comprise at least one array of detector elements, for example a CCD array, and an optical system for mapping the sample light spots onto said array. Thus the signal light coming from the sample light spots will be directed to different detector elements allowing a spatially resolved measurement of the sample light spots. In this way a plurality of different measurements and/or a plurality of repeated measurements of the same kind can be executed in parallel.

In many cases, for example during the observation of fluorescence, the signal light that is generated in the sample chamber propagates in all directions. Thus it may be detected in "forward direction", i.e. after traveling in the same direction as the input light propagates from the MSG to the sample light spots and beyond. In the opposite case, signal light from the sample layer may be detected in "reverse direction", i.e. a direction opposite to the propagation direction of the input light. A measurement in reverse direction has the advantage that the signal light from a sample layer at the surface of the sample chamber does not have to travel largely through the sample chamber where noise might be added. Moreover, the measurement in reverse direction is preferable with respect to sample-handling because as there are no optics or detectors behind the sample, the sample can easily be connected to the system and there is no need for protecting the backside of the sample against e.g. dust. Furthermore, signal light from the sample layer may be detected in "perpendicular direction", i.e. in a direction perpendicular to the propagation direction of the input light. Moreover, combinations of the aforementioned setups which comprise measurements in a "diagonal" direction (i.e. with components in forward/reverse and perpendicular direction) are possible, too.

In order to allow for a measurement of signal light in reverse direction, the transmission section preferably comprises a (dichroic) beam splitter that directs input light from the MSG to the storage unit and signal light from the sample chamber to the signal detector. The beam splitter may particularly comprise dichroic components that show different optical behavior for different wavelengths of light, for example prisms that transmit input light of a first wavelength and simultaneously reflect fluorescence light of other wavelengths or vice versa.

The investigation apparatus described above allows the investigation of an area within a sample layer of the sample chamber by multiple sample light spots. In certain cases, said investigated area will not cover the whole sample layer but only a fraction thereof. In order to allow an investigation of the whole sample layer in these cases, the apparatus is preferably adapted to shift the array of sample light spots relative to the sample chamber. This shifting may for example be achieved by a scanning unit that selectively guides light coming from the MSG or by moving the MSG (or a component of it, e.g. a mask array).

According to a further development of the aforementioned embodiments that allow a movement of the sample light spots, the apparatus is adapted to identify and re-localize positions of the sample light spots relative to the sample layer. This makes it possible to repeat a measurement at certain locations in the sample layer at least one times, thus allowing to gain additional information from a temporal development at said locations.

When the propagation of signal light emitted at the sample light spots of the sample chamber is analyzed in more detail, it can be found that a certain fraction of this light will be lost for detection because it cannot leave the storage unit due to total internal reflection (TIR) at the outer side of the storage unit. Such light has been called light of the "SC-modes" in literature (for details see WO 02/059583 A1, which is incorporated into the present specification by reference). According to a preferred embodiment of the invention, diffractive structures will be provided at the outer side of the storage unit, wherein said structures are adapted to couple out signal light of the SC-modes, i.e. light from inside the storage unit that would be totally internally reflected at a normal (smooth) outer side. Due to the exploitation of the SC-modes, the signal gain can be significantly increased.

There are several ways to realize a multi-spot generator MSG suited for the investigation apparatus. Preferably the MSG may comprise an amplitude mask, a phase mask, a holographic mask, a diffractive structure, a (micro-)lens array, a Vertical Cavity Surface-Emitting Laser (VCSEL) array and/or a multi-mode interferometer (MMI) for the generation of an array of source light spots at the output side of the MSG.

In a preferred embodiment of the invention, the MSG comprises a (single) light source for generating a primary light beam and an optical multiplication unit for splitting the primary light beam into an array of source light spots at the output side of the MSG. The multiplication unit may for example be realized by an MMI as will be described in more detail below. The splitting of a primary light beam has the advantage that only one light source (or a few light sources) is needed and the resulting source light spots have automatically the same features (wavelength, shape, intensity etc).

In another preferred embodiment of the invention, the MSG is adapted to generate an array of source light spots of coherent light, wherein said light generates a Talbot pattern during its further propagation. Due to the self-imaging character of the Talbot effect, the source light spots are periodically reproduced at certain distances, such that an image of them can be generated within the sample chamber. An advantage of this application of the Talbot effect is that the transmission section requires a minimum of optical elements (lenses). For the generation of coherent source light spots, the MSG may particularly comprise one coherent light source.

The invention further comprises a method for the treatment of a sample material with light, comprising the following steps:

a) The generation of an array of multiple sample light spots by "input light", wherein said sample light spots lie in a sample chamber that contains the sample material to be treated.

b) The measurement of input light that propagates beyond the sample light spots, wherein this measurement may serve as a reference value.

c) The measurement of the signal light that is generated in the sample chamber, wherein the result of said detection may be just a binary value (detected/not-detected) or a continuous value of a measured light quantity. Said signal light may particularly be fluorescent light from the sample material stimulated by the input light. Moreover, the signal light is preferably measured outside the optical path of the input light in order to determine it free from disturbances by the input light.

The method comprises in general form the steps that can be executed with an investigation apparatus of the kind described above. Therefore, reference is made to the preceding description for more information on the details, advantages and improvements of that method.

According to a preferred embodiment of the method, an array of source light spots of coherent light is generated from which light propagates by the Talbot effect. Due to the self-imaging character of the Talbot effect, an image of the array of source light spots may then be generated in the sample chamber with a minimum of optical elements if the sample chamber is disposed at the Talbot distance or a multiple thereof.

The sample light spots may particularly be generated by an array of corresponding light beams, wherein said light beams are preferably generated by splitting a primary light beam. In this way a plurality of identical light beams with required characteristics can be readily created.

In order to increase the signal gain, light emitted from sample material in the sample chamber that would not be able to leave the storage unit due to TIR, i.e. light of the so-called SC-modes, can be coupled out of the storage unit by diffraction.

A further development of the method is characterized in that the sample chamber is scanned with an array of sample light spots, wherein identical positions of the array are reproduced at least one times. Thus treatments can be repeated as often as desired in different locations of the sample chamber. In a particular application, this can be used for the detection of occupied binding sites in the sample chamber, preferably for the detection of a fluorescent labeling element bound to probes in the sample chamber. The method comprises in this case the scanning of the sample chamber with an array of sample light spots and the detection of target specific responses, e.g. fluorescent light, with the signal detector. If the size of the sample light spots is chosen small enough, the scanning speed is fast enough, and the concentration of binding sites is low, only one occupied binding site will be irradiated at the same time. A location in the sample chamber is classified as an occupied binding site if a target specific response is observed in repeated scans of said location. Such repeated scans particularly allow to discriminate between specific and nonspecific binding.

In the following the invention is described by way of example with the help of the accompanying drawings in which:

Figure 1 shows a side view of an investigation apparatus according to the present invention;

Figure 2 shows a perpendicular section through the sample chamber of the apparatus of Figure 1 along lines II-II;

Figure 3 shows the generation and propagation of multiple light spots by means of the Talbot effect;

Figure 4 shows an investigation apparatus with a beam splitter and means to capture fluorescence light of SC-modes;

Figure 5 shows a setup with a scanning unit for scanning an array of multiple light spots through a sample.

It should be noted that the Figures are not drawn to scale and that features disclosed in the different Figures and embodiments may be arbitrarily combined in an investigation apparatus according to the present invention.

In (bio-)chemical assays fluorescence of a molecule/sample is for example used for measuring the concentration of a molecule in a solution or for detecting a bonding event (e.g. adhesion of the molecule at a layer). Ideally one would like to use a sensing array as it allows to measure multiple events, species of molecules and the location of molecules, depending on the properties of the bonding layer and the excitation light. The present invention addresses this need while trying to simultaneously improve on three points: analytical performance (sensitivity, specificity, and speed), ease of use (robustness, integration), and costs.

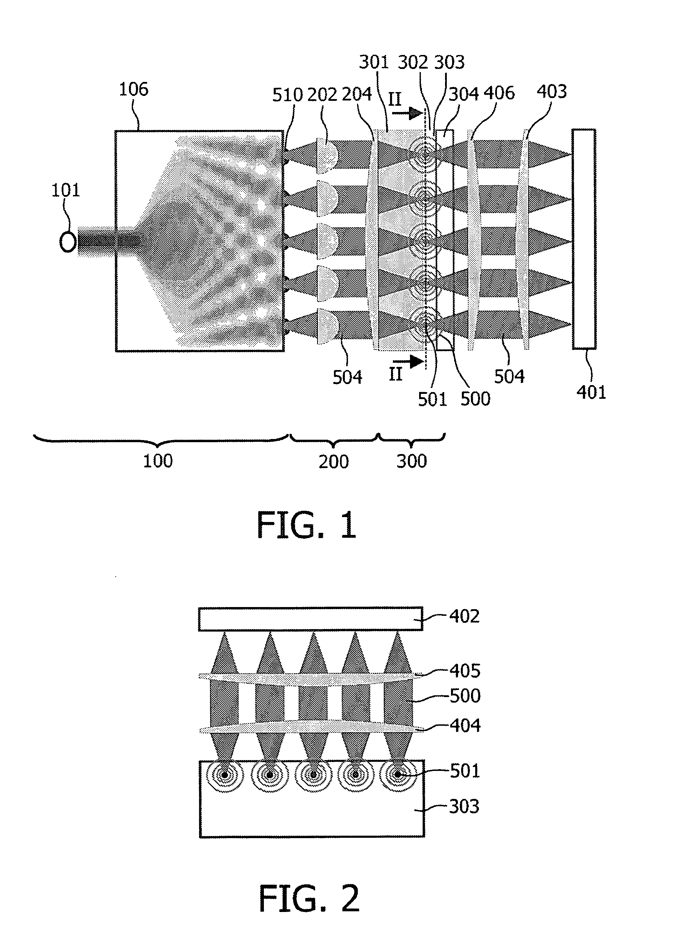

In Figure 1, an exemplary setup of an investigation apparatus according to the present invention is shown. Said investigation apparatus basically consists of four components or subsystems:

- A multi-spot-generator 100 (abbreviated "MSG" in the following) for the generation of an array of multiple source light spots 510 at its output side. Said source light spots 510 typically are (approximately) circular in shape with a diameter ranging from half of the respective wavelength (e.g. 0.3 $\mu$m) to 100 $\mu$m. Moreover, the distance between two neighboring spots 510 typically lies in the same range.

- A transmission section 200 that has the task to transmit "input light" from the source light spots 510 to a storage unit 300 containing the sample. While the transmission section may in principle be simply a space filled with air or another medium, it typically comprises dedicated optical components to achieve the desired transmission of input light from the source light spots 510 to a (one-dimensional) array of sample light spots 501 in the sample.

- The aforementioned storage unit 300 for the storage and keeping of a sample material that shall be investigated. Though the storage unit 300 may in principle be realized in many ways, most realizations will comprise the components shown in Figure 1. These components are: (i) a substrate or carrier 301 that is transparent for the input light generated by the MSG 100 and that may for example be a glass plate; (ii) a sample chamber 303 which can be filled with a fluid containing the sample material (e.g. biological molecules solved in water); (iii) a cover plate 304 which follows and borders the sample chamber 303 and which may also consist of a transparent material like glass (in other embodiments of the storage unit the cover plate may be missing). The side of the carrier plate 301 that contacts the sample chamber 303 is the so-called "sample side", and the thin layer of the sample chamber 303 that is adjacent to this sample side constitutes a so-called "sample layer" 302 in which the investigation of the sample material typically takes place. For the investigation the source light spots 510 generated by the MSG 100 are mapped to "sample light spots" 501 within the sample chamber 303. The light of these sample light spots 501 may for example stimulate fluorescence of the sample material with an (isotropic or anisotropic) emission of fluorescence signal light 500 in forward direction (to the right in Figure 1) and reverse direction (to the left in Figure 1), and lateral direction (orthogonal to the drawing plane in Figure 1).

- A detector system for the measurement of light coming from the sample chamber 303. The detector system comprises a "reference detector" 401 for the detection of input light 504 propagating in forward direction beyond the sample light spots 501 and a "signal detector" 402 (Figure 2) for the detection of signal light 500 in the lateral direction, i.e. perpendicular to the drawing plane of Figure 1.

The MSG 100 may particularly comprise a (coherent) light source 101 feeding a beam of primary light into a beam splitting unit that splits or copies the primary light into an array of (identical or similar) source light spots 510 which are presented at the output side of the MSG 100. In the case shown in Figure 1, the splitting unit is realized by a multi-mode interferometer MMI 106. An MMI consists of a multi-modal optical waveguide. The light of the (preferably single mode) input waveguide or input spot is divided over the modes of the multi-modal waveguide section. At a given cross-section of the MMI, the intensity distribution is a periodic interference pattern between the modes of the MMI.

By making the MMI 106 tunable, one could avoid problems with the wavelength dependence of the MMI. The intensity pattern at the output side of the MMI could be tuned by changing the propagation constants of the modes. By tuning the MMI, one could also select the number of spots at the output side of the MMI and match the position of the spots with the sample layer or with optics in the transmission section 200. Because the total power in a spot is in first approximation inversely proportional to the number of spots, one could also vary/optimize the excitation power and as a consequence optimize the signal-to-noise ratio of the measurements.

The MMI 106 shown in Figure 1 may for example generate a one-dimensional (N×1) array of 5 spots, with the following parameters:

Refractive indexes: core (1.6); background (1.5);
Widths: centered input waveguide (2 $\mu$m); MMI section (20 $\mu$m);
Length: MMI section for 1×5 spots generation (135 $\mu$m);
Self-imaging distance (image repeats at this distance): 5417 $\mu$m;
Number of modes supported by MMI: 22.

Accurate generation of the multiple spots 510 requires that the MMI is sufficiently wide (the wider the more modes are supported by the MMI). As a rule of thumb the number of modes supported by the MMI should be at least (number of spots + 1). Increasing the width of the MMI increases the image quality, but also increases the required length; in good approximation the self-imaging distance depends quadratically on the width of the MMI.

By proper layout of the MMI, two-dimensional (N×M) arrays of spots can be created as well. It should be remarked that the generation of the multiple spots is based on interference and can in principle be performed without significant losses. Another advantage of an MMI is that it is a relatively simple method, which does not require alignment of lenses and period structures.

More details about the principle of the MMI may be found in literature (e.g. R.M. Jenkins et al., Appl. Phys. Lett., vol. 64, p. 684, 1994; M. Bachman et al., Appl. Opt., vol. 33, p. 3905, 1994; L.B. Soldano and E.C.M. Pennings, J. Lightwave Technol., vol. 13, p. 615, 1995).

The array of source light spots 510 that is present at the output side of the MSG 100 is mapped in the transmission section 200 by collimator micro-lenses 202 and a focus (macro)-lens 204 onto sample light spots 501 in the sample layer 302 of the sample chamber 303. Preferably the carrier plate 301 has the same refractive index as the focusing lens 204 in order to avoid reflections at the interface between these two components. Here and in the following a single (macro) lens could be used instead of arrays of micro-lenses (e.g. 202) and vice versa.

The main advantages of an investigation apparatus according to Figure 1 are:

- Simultaneous/parallel excitation of the complete array.
- Simultaneous/parallel detection of the fluorescence in the complete array.
- Simultaneous/parallel measurement of transmitted input light as a reference in the complete array.
- No moving elements, making the design potentially cheap and stable.
- Allows easy separation of the excitation light and the fluorescence when suited detection schemes are used, yielding a potential for high signal-to-noise ratios.

Figure 2 shows a section through the sample chamber 303 of the apparatus of Figure 1 along the dotted line II-II. Fluorescent light 500 stimulated in the sample light spots 501 propagates (also) perpendicular to the propagation direction of the input light. After leaving the sample chamber 303 in lateral direction (remark: side walls of said chamber or not shown in the Figure), said signal light 500 is collimated by a lens 404 and focused by a focus lens 405 onto the CCD array of the signal detector 402, where the emissions from the sample light spots 501 can be measured in a spatially resolved way.

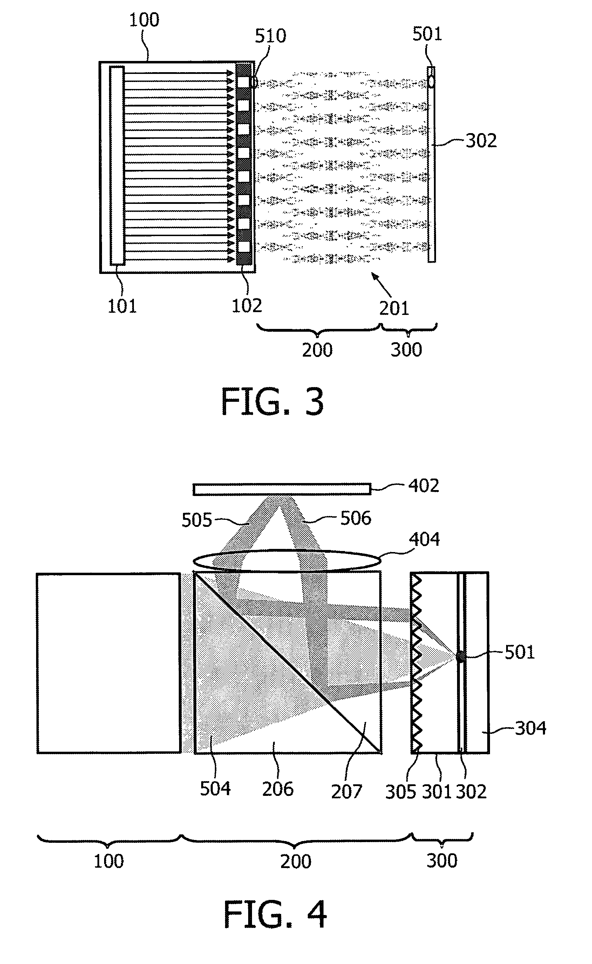

Figure 3 shows a preferred way for the transmission of input light from the MSG to the sample, wherein the source light spots 510 that are present on the output side of the MSG 100 finally generate the sample light spots 501 in the sample layer 302. The transmission takes place via the Talbot effect, i.e. the self-imaging of a regular pattern (in this case the array of source light spots 510) that is illuminated with a collimated beam of coherent light.

In order to produce the Talbot effect, the MSG 100 comprises a light source 101 generating a collimated bundle of coherent light. Said coherent light illuminates an amplitude mask 102 (with e.g. a period d = 20 $\mu$m and an open closed ratio of 50%) that generates a regular pattern of source light spots 510. The array of spots 510 might also be generated by other means, for example a multi-mode interferometer (MMI), a diffractive structure, an array of (micro-)lenses or an array of VCSELs (Vertical Cavity Surface-Emitting Lasers). The source light spots 510 produce by interference the Talbot intensity pattern 201 which propagates through the intermediate distance into the components (glass, water) of the storage unit 300. It is a characteristic of the Talbot effect that the intensity pattern of the source light spots 510 is periodically reproduced at the so-called self-imaging or Talbot distances which depend on the parameters of the setup. If for instance a grating 102 with period d is illuminated coherently, an image appears behind the grating at distances $N(2d^2/\lambda)$, where $N$ is an integer and $\lambda$ the wavelength of the light. By appropriate choice of the imaging parameters, it is thus possible to generate an image of the array of source light spots 510 at the sample side of the carrier 301. For a detailed discussion of the Talbot effect reference is made to the literature (cf. A.W. Lohmann and J.A. Thomas, Appl. Opt., vol. 29, p. 4337, 1990; W. Klaus, Y. Arimoto and K. Kodate, Appl. Opt., vol. 37, p. 4357, 1998; J.W. Goodman, Fourier Optics, McGraw-Hill, New York, chapter 4, 1996).

The multiple source light spots might also be generated by a phase or holographic mask (which reproduces them roughly at 60% of the Talbot distance).

An important advantage of the aforementioned application of self-imaging is that it minimizes the amount of optical components like lenses in the transmission section 200, making it a simple and robust design.

The observation of fluorescent light stimulated at the sample light spots 501 can be achieved with setups different from that depicted in Figure 1. Thus Figure 4 shows an embodiment for the measurement of fluorescence light in reverse direction. As in the apparatus of Figure 1, source light spots generated by an MSG 100 are collimated and focused by lenses (not shown) at sample light spots 501 in the sample layer 302. In contrast to Figure 1, a dichroic beam splitter consisting of two prisms or wedges 206, 207 is disposed between the MSG 100 and the storage unit 300. This beam splitter has a coating such that it transmits the input light 504 and reflects the fluorescence light. Other means of separating the excitation and fluorescence light are of course not excluded from the invention.

Fluorescence light emitted from stimulated molecules in the sample layer 302 propagates in reverse direction (i.e. opposite to the excitation light) through the carrier plate 301 and the right wedge 207. At the inclined face of said wedge 207, the fluorescence light is reflected at right angles towards a focus lens 404 which maps it onto a CCD array 402. The fluorescence light may thus be measured separately and undisturbed from the excitation light 504.

As is discussed in detail in the WO 02/059583 A1, the fluorescence light stimulated in the sample layer 302 can be subdivided into different components or modes according to its propagation behavior in the neighboring materials. One mode that is of particular interest here is the so-called SC-mode which comprises all the fluorescence light that propagates from the sample layer 302 into the glass carrier 301 under such angles that it is totally internally reflected at the (planar) outer side of the carrier plate 301. Thus the light of the SC-modes is normally lost for the detection process.

In order to make this light usable for detection purposes, it is known from the WO 02/059583 A1 to provide a diffraction grating 305 at the outer side of the carrier 301. The grating has the effect that light of the SC-modes is coupled out of the glass carrier 301 and propagates in reverse direction in light bundles 505, 506 that are highlighted in Figure 4 (light of other modes is not depicted for better clarity). The light of these SC-modes is reflected at the backside of the dichroic prism 207 of the beam splitter and projected by a focus lens 404 onto a detector device 402.

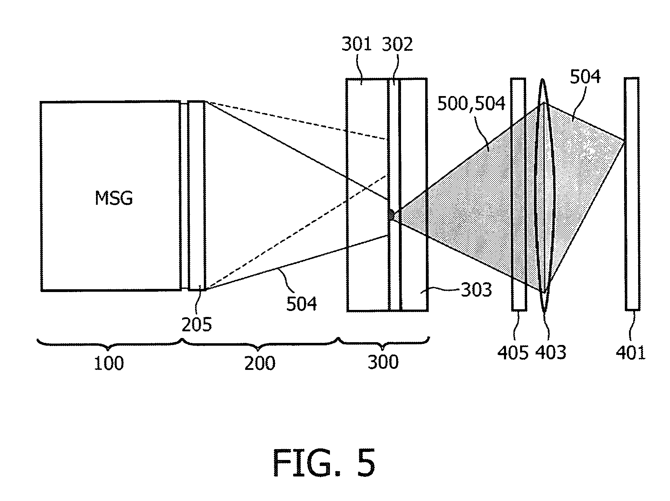

Figure 5 schematically shows an embodiment of the investigation apparatus with a scanning unit 205 following the MSG 100 in the optical path. With the help of this scanning unit 205, the array of source light spots generated by the MSG can be directed onto different sub-areas of the sample layer 302 in the storage unit 300.

When stimulating a sample material with a single light spot, e.g. by using a moving optical pick-up unit (OPU) of a CD/DVD-player above the fixed sample, the maximum fluorescent excitation power is limited by the saturation fluorescent intensity. The measuring time can be decreased and/or the sensitivity can be increased by using the extra available laser power to apply a multi-spot approach as it is subject of the present invention. In this case the generation and scanning of the multi-spots should be done in a simple and cost effective way and preferably with no moving elements.

A first step to achieve a solution of the aforementioned objective comprises the use of the Talbot effect (cf. Figure 3), because it allows imaging of a (periodic) array of propagating spots at periodic distances without the help of lenses. In this way only the area spanned by the neighboring spots needs to be scanned for the interrogation of the total sample layer. A dynamic scanning unit 205 comprising for example moving optical elements like lenses or mirrors can be used to scan the multi-spots.

Another possibility to move an array of multiple light spots through a sample is to scan the MSG. If for example an aperture array 102 as shown in Figure 3 is used in the MSG, the apertures only need to be moved in order to move the sample light spots 501. This is an embodiment that requires no moving lenses.

A characteristic feature of the investigation apparatus of Figure 5 is the single event detection with parallel spots in a scanning optical arrangement. Single event detection requires a certain minimum power and energy of the emitted radiation to be detected by a sensor. The choice of power conditions is elaborated in the following section.

The fluorophores can roughly be divided in different groups by looking to the fluorescence lifetime $\tau_{fluor}$, the cross sections for the absorption $\sigma_{abs}$, and the fluorescent quantum efficiency $\phi$ (cf. (S.W. Hell, and J. Wichmann, Opt. Lett. 19, 780, 1994),

e.g. Cyanine, Alexa, fluoresceine: $\tau_{fluor} \sim$1-5 ns, $\sigma_{abs} \sim 10^{-16}$ cm$^2$, $\phi$=0.5-1.
e.g. Ru, Ir: $\tau_{fluor} \sim$1 μs, $\sigma_{abs} \sim 10^{-16}$ cm$^2$, $\phi$=0.1-0.8.
e.g. Eu, Tb: $\tau_{fluor} \sim$1 ms, $\sigma_{abs} << 10^{-16}$ cm$^2$, $\phi$=0.1-0.5.
beads, e.g. 200 nm diameter: $\sigma_{abs} \sim 10^{-12}$-$10^{-14}$ cm$^2$.
quantum dots: $\sigma_{abs} \sim 10^{-15}$-$10^{-16}$ cm$^2$.

The saturated fluorescent excitation intensity is

$$I_S = \frac{hc}{\lambda \tau_{fluor} \sigma_{abs}}$$

with h the Planck's constant, c the speed of light, and λ the wavelength of the absorbed light. A saturated-fluorescent excitation intensity $I_s$ of several μW's up to several mW's is found for a 0.2 μm$^2$ surface area (corresponds with an optical spot size of a DVD optical pickup unit with 0.6 NA and 650 nm). Thus, depending on the used fluorophores and the maximum applicable laser power (e.g. 100 mW at the sample) a few (2-100) up to many (100-100000) Talbot spots can be used in parallel to scan the sensing array.

The fluorescent light excited by the propagating Talbot spots can be detected in the forward and the backward (reverse) propagation direction.

The forward fluorescent detection scheme is shown in Figure 5. The Talbot spots can be generated by different optical components, e.g. a mask with open and closed section, a multi-mode interferometer, a diffractive structure for generating an array of spots, an array of lenses or an array of VCSELs. The scanning of the Talbot spots over the sample layer 302 can be obtained by scanning the multi-spot light source in the lateral direction. A scanning unit 205 behind the MSG 100 allows to scan the Talbot spots. The sample layer 302 of the storage unit 300 is positioned in the first Talbot plane. The minimal spot size is determined by the diffraction limit.

A filter 405 on the other side of the storage unit 300 is used to block the red-shifted fluorescent light 500 from the input light 504 which is imaged on the pixelated reference detector 401 using an achromatic lens 403.

Servo signals for focusing and tracking could be generated by some spots, e.g. the four spots at the corners of the multi-spot array. The reflected signal at the water interface could be used for focusing and to compensate for tilt. The push-pull signal from pregrooves at the corners of the sample could be used for tracking. A sample actuator with three degrees of freedom could be used to optimize the distance between the light source and the sample and the tilt between these two components.

The detection of the fluorescent light can be obtained in the lateral or backwards direction as in Figures 1 or 4, respectively, because the emission is isotropic. In an embodiment as in Figure 4, a dichroic beam splitter is required to direct the backwards fluorescent light towards the detector. Preferably the length of the dichroic beam splitter is chosen such that - ignoring aberrations - the output of the beam splitter is a Talbot image of the input. In that case the input facet of the beam splitter should be in a plane where a Talbot image of the array of input spots is created and the sample side of the carrier 301 should be in a plane where a Talbot image of the output of the beam splitter is created. Other configurations where the input and output facets of the beam splitter are not Talbot planes are also possible, as long as the image at the sample side of the carrier 301 is a Talbot image (ignoring aberrations) of the array of input spots.

The size of the dichroic beam splitter will be roughly 1 mm for a sensing array with a size $1 \times 1$ mm$^2$. The distance to the first Talbot plane (in air) for a spot pitch of 20 $\mu$m and a wavelength of 500 nm is 1.6 mm. In this exemplar case the $1 \times 1$ mm$^2$ sensing array would be simultaneously scanned by $50 \times 50$ Talbot spots.

Finally it is pointed out that in the present application the term "comprising" does not exclude other elements or steps, that "a" or "an" does not exclude a plurality, and that a single processor or other unit may fulfill the functions of several means. The invention resides in each and every novel characteristic feature and each and every combination of characteristic features. Moreover, the above description of the Figures and of preferred embodiments of the invention are intended to be illustrative, not limiting, and reference signs in the claims shall not be construed as limiting their scope.

LIST OF REFERENCE SIGNS:

100     multi-spot generator MSG

| | |
|---|---|
| 101 | (coherent) light source |
| 102 | mask |
| 106 | multi-mode interferometer MMI |
| 200 | transmission section |
| 201 | Talbot pattern |
| 202 | collimator micro-lens |
| 204 | focus lens |
| 205 | scanning unit |
| 206 | prism of dichroic beam splitter |
| 207 | prism of dichroic beam splitter |
| 300 | storage unit |
| 301 | carrier plate |
| 302 | sample layer |
| 303 | sample chamber |
| 304 | cover plate |
| 305 | diffractive structure |
| 401 | reference detector |
| 402 | signal detector |
| 403 | focus lens |
| 404 | focus lens |
| 405 | filter |
| 500 | signal light (fluorescence) |
| 501 | sample light spot |
| 504 | input (excitation) light |
| 505 | fluorescence in SC-mode |
| 506 | fluorescence in SC-mode |
| 510 | source light spots |

**Claims**

1. Apparatus for the treatment of a sample material with light, comprising

   a) a storage unit (300) that allows the passage of input light (504) and comprises a sample chamber (303) that may be provided with the sample material;
   b) an illumination system (100, 200) for generating with input light (504) an array of sample light spots (501) in the sample chamber (303);
   c) a reference detector (401) for measuring input light (504) that propagates beyond the sample light spots (501);
   d) a signal detector (402) for measuring signal light (500) that is generated in the sample chamber (303);
   e) means for referencing the measured amount of signal light to the measured amount of input light for the sample light spots.

2. Apparatus according to claim 1, **characterized in that** the storage unit (300) comprises a transparent carrier plate (301) and a transparent cover plate (304) which enclose the sample chamber (303).

3. The apparatus according to claim 1, **characterized in that** the illumination system comprises a multi-spot generator MSG (100) for generating input light in the form of an array of source light spots (510) at its output side and a transmission section (200) for the transmission of input light (504) from the source light spots (510) to the sample light spots (501).

4. The apparatus according to claim 1, **characterized in that** the signal detector (402) is disposed outside the optical path of the input light (504), preferably perpendicular to the propagation direction of the input light (504).

5. The apparatus according to claim 1, **characterized in that** the reference detector (401) and/or the signal detector (402) comprises an array of detector elements, particularly a CCD array, and an optical system (403, 404, 405, 406) for mapping the sample light spots (501) onto said array.

6. The apparatus according to claim 3, **characterized in that** the transmission section (200) comprises a beam splitter that guides input light (504) from the MSG (100) to the storage unit (300) and signal light from the sample chamber (303) to the signal detector (402).

7. The apparatus according to claim 1, **characterized in that** it is adapted to shift the array of sample light spots (501) relative to the sample chamber (303), preferably by means of a scanning unit (205) for selectively guiding input light generated by the MSG (100).

8. The apparatus according to claim 1, **characterized** that diffractive structures (305) are provided on at least one outer surface of the storage unit (300) that are adapted to couple out signal light (505, 506) that would be totally internally reflected without such structures.

9. The apparatus according to claim 3, **characterized in that** the MSG (100) comprises an amplitude mask (102), a phase mask, a holographic mask, a diffractive structure, a micro-lens array, a VCSEL array and/or a multi-mode interferometer (106) for the generation of an array of source light spots (510) at the output side of the MSG (100).

10. The apparatus according to claim 3, **characterized in that** the MSG (100) comprises a light source (101) for generating a primary light beam and an optical multiplication unit, particularly a multi-mode interferometer (106), for splitting the primary light beam into an array of source light spots (510) at the output side of the MSG (100).

11. The apparatus according to claim 3, **characterized in that** the MSG (100) is adapted to generate an array of source light spots (510) of coherent light that produce a Talbot pattern (201).

12. A method for the treatment of a sample material with light, comprising

   a) the generation of input light (504) and, with the help of said input light, of an array of multiple sample light spots (501) in a sample chamber (303) containing the sample material;
   b) the measurement of input light (504) that propagates beyond the sample light spots (501);
   c) the measurement of the signal light (500) that is generated in the sample chamber (303)
   d) referencing the measured amount of signal light to the measured amount of input light for the sample light spots.

13. The method according to claim 12, **characterized in that** the input light (504) stimulates fluorescence (500) of the sample material.

14. The method according to claim 12, **characterized in that** the signal light (500) is measured outside the optical path of the input light (504).

**Patentansprüche**

1. Vorrichtung zur Behandlung eines Probenmaterials, mit

   a) einer Speichereinheit (300), welche den Durchgang von Eingangslicht (504) erlaubt und eine Probenkammer (303) umfasst, die mit dem Probenmaterial versehen werden kann;
   b) einem Beleuchtungssystem (100, 200), um mit Eingangslicht (504) ein Array von Proben-Lichtpunkten (501) in der Probenkammer (303) zu erzeugen;
   c) einem Referenzdetektor (401) zum Messen von Eingangslicht (504), welches sich über die Proben-Lichtpunkte (501) hinaus ausbreitet;
   d) einem Signaldetektor (402) zum Messen von Signallicht (500), welches in der Probenkammer (303) erzeugt wird;
   e) Mitteln zur Referenzierung der gemessenen Signallichtmenge auf die gemessene Eingangslichtmenge für die Proben-Lichtpunkte.

2. Vorrichtung nach Anspruch 1, **dadurch gekennzeichnet, dass** die Speichereinheit (300) eine lichtdurchlässige Trägerplatte (301) und eine lichtdurchlässige Deckplatte (304) umfasst, welche die Probenkammer (303) umgeben.

3. Vorrichtung nach Anspruch 1, **dadurch gekennzeichnet, dass** das Beleuchtungssystem einen Mehrpunktgenerator MSG (100) zur Erzeugung von Eingangslicht in der Form eines Arrays von Lichtpunkten (510) einer Lichtquelle an seiner Ausgangsseite sowie einen Durchlässigkeitsteil (200) zum Durchlassen von Eingangslicht (504) von den Lichtpunkten (510) einer Lichtquelle zu den Proben-Lichtpunkten (501) umfasst.

4. Vorrichtung nach Anspruch 1, **dadurch gekennzeichnet, dass** der Signaldetektor (402) außerhalb des optischen Wegs des Eingangslichts (504), vorzugsweise senkrecht zu der Ausbreitungsrichtung des Eingangslichts (504), angeordnet ist.

5. Vorrichtung nach Anspruch 1, **dadurch gekennzeichnet, dass** der Referenzdetektor (401) und/oder der Signaldetektor (402) ein Array von Detektorelementen, im Besonderen ein CCD-Array, sowie ein optisches System (403, 404, 405, 406) umfasst, um die Proben-Lichtpunkte (501) auf dem Array abzubilden.

6. Vorrichtung nach Anspruch 3, **dadurch gekennzeichnet, dass** der Durchlässigkeitsteil (200) einen Strahlteiler umfasst, der Eingangslicht (504) von dem MSG (100) zu der Speichereinheit (300) und Signallicht von der Probenkammer (303) zu dem Signaldetektor (402) leitet.

7. Vorrichtung nach Anspruch 1, **dadurch gekennzeichnet, dass** diese das Array von Proben-Lichtpunkten (501) relativ zu der Probenkammer (303), vorzugsweise mit Hilfe einer Abtasteinheit (205), verschieben kann, um von dem MSG (100) erzeugtes Eingangslicht selektiv zu leiten.

8. Vorrichtung nach Anspruch 1, **dadurch gekennzeichnet, dass** auf mindestens einer Außenfläche der Speichereinheit (300) diffraktive Strukturen (305) vorgesehen sind, die Signallicht (505, 506), welches ohne solche Strukturen innen total reflektiert würde, auskoppeln können.

9. Vorrichtung nach Anspruch 3, **dadurch gekennzeichnet, dass** der MSG (100) eine Amplitudenmaske (102), eine Phasenmaske, eine holographische Maske, eine diffraktive Struktur, ein Mikrolinsenarray, ein VCSEL-Array und/oder ein Mehrmoden-Interferometer (106) zur Erzeugung eines Arrays von Lichtpunkten (510) einer Lichtquelle an der Ausgangsseite des MSGs (100) umfasst.

10. Vorrichtung nach Anspruch 3, **dadurch gekennzeichnet, dass** der MSG (100) eine Lichtquelle (101) zur Erzeugung eines Primärlichtstrahls sowie eine optische Multiplikationseinheit, im Besonderen ein Mehrmoden-Interferometer (106), umfasst, um den Primärlichtstrahl in ein Array von Lichtpunkten (510) der Lichtquelle an der Ausgangsseite des MSGs (100) aufzuspalten.

11. Vorrichtung nach Anspruch 3, **dadurch gekennzeichnet, dass** der MSG (100) ein Array von Lichtquellen-Lichtpunkten (510) aus kohärentem Licht erzeugen kann, die eine Talbotstruktur (201) bilden.

12. Verfahren zur Behandlung eines Probenmaterials mit Licht, welches die folgenden Schritte umfasst:

a) Erzeugen von Eingangslicht (504) und eines Arrays von einer Vielzahl von Proben-Lichtpunkten (501) in einer das Probenmaterial enthaltenden Probenkammer (303) mit Hilfe des Eingangslichts;
b) Messen von Eingangslicht (504), welches sich über die Proben-Lichtpunkte (501) hinaus ausbreitet;
c) Messen des Signallichts (500), welches in der Probenkammer (303) erzeugt wird; sowie
d) Referenzieren der gemessenen Signallichtmenge auf die gemessene Eingangslichtquelle für die Proben-Lichtpunkte.

13. Verfahren nach Anspruch 12, **dadurch gekennzeichnet, dass** das Eingangslicht (504) die Fluoreszenz (500) des Probenmaterials anregt.

14. Verfahren nach Anspruch 12, **dadurch gekennzeichnet, dass** das Signallicht (500) außerhalb des optischen Wegs des Eingangslichts (504) gemessen wird.

## Revendications

1. Appareil pour le traitement d'un matériau d'échantillon avec une lumière, comprenant :

a) une unité de stockage (300) qui permet le passage d'une lumière d'entrée (504) et qui comprend une chambre d'échantillon (303) qui peut être fournie avec le matériau d'échantillon ;
b) un système d'illumination (100, 200) pour générer avec la lumière d'entrée (504) un réseau de taches de lumière d'échantillon (501) dans la chambre d'échantillon (303) ;
c) un détecteur de référence (401) pour mesurer la lumière d'entrée (504) qui se propage au-delà des taches de lumière d'échantillon (501) ;
d) un détecteur de signal (402) pour mesurer une lumière de signal (500) qui est générée dans la chambre d'échantillon (303) ;
e) des moyens pour mettre la quantité mesurée de lumière de signal en référence avec la quantité mesurée de lumière d'entrée pour les taches de lumière d'échantillon.

**2.** Appareil selon la revendication 1, **caractérisé en ce que** l'unité de stockage (300) comprend une plaque porteuse transparente (301) et une plaque de couvercle transparente (304) qui enferment la chambre d'échantillon (303).

**3.** Appareil selon la revendication 1, **caractérisé en ce que** le système d'illumination comprend un générateur de taches multiples MSG (100) pour générer une lumière d'entrée sous la forme d'un réseau de taches de lumière source (510) au niveau de son côté de sortie et une section de transmission (200) pour la transmission d'une lumière d'entrée (504) des taches de lumière source (510) aux taches de lumière d'échantillon (501).

**4.** Appareil selon la revendication 1, **caractérisé en ce que** le détecteur de signal (402) est disposé à l'extérieur du chemin optique de la lumière d'entrée (504), de préférence perpendiculairement à la direction de propagation de la lumière d'entrée (504).

**5.** Appareil selon la revendication 1, **caractérisé en ce que** le détecteur de référence (401) et/ou le détecteur de signal (402) comprennent un réseau d'éléments de détecteur, particulièrement un réseau de CCD, et un système optique (403, 404, 405, 406) pour mapper les taches de lumière d'échantillon (501) sur ledit réseau.

**6.** Appareil selon la revendication 3, **caractérisé en ce que** la section de transmission (200) comprend un diviseur de faisceau qui guide la lumière d'entrée (504) du MSG (100) à l'unité de stockage (300) et la lumière de signal de la chambre d'échantillon (303) au détecteur de signal (402).

**7.** Appareil selon la revendication 1, **caractérisé en ce qu'**il est apte à décaler le réseau de taches de lumière d'échantillon (501) par rapport à la chambre d'échantillon (303), de préférence au moyen d'une unité de balayage (205) pour guider sélectivement la lumière d'entrée générée par le MSG (100).

**8.** Appareil selon la revendication 1, **caractérisé en ce que** des structures diffractives (305) sont fournies sur au moins une surface extérieure de l'unité de stockage (300) qui sont aptes à découpler la lumière de signal (505, 506) qui serait totalement reflétée en interne sans de telles structures.

**9.** Appareil selon la revendication 3, **caractérisé en ce que** le MSG (100) comprend un masque d'amplitude (102), un masque de phase, un masque holographique, une structure diffractive, un réseau de microlentilles, un réseau VCSEL et/ou un interféromètre multimodal (106) pour la génération d'un réseau de taches de lumière source (510) au niveau du côté de sortie du MSG (100).

**10.** Appareil selon la revendication 3, **caractérisé en ce que** le MSG (100) comprend une source de lumière (101) pour générer un faisceau de lumière principal et une unité de multiplication optique, particulièrement un interféromètre multimodal (106), pour diviser le faisceau de lumière principal en un réseau de taches de lumière source (510) au niveau du côté de sortie du MSG (100).

**11.** Appareil selon la revendication 3, **caractérisé en ce que** le MSG (100) est apte à générer un réseau de taches de lumière source (510) de lumière cohérente qui produit un motif de Talbot (201).

**12.** Procédé pour le traitement d'un matériau d'échantillon avec une lumière, comprenant :

a) la génération d'une lumière d'entrée (504) et, avec l'aide de ladite lumière d'entrée, d'un réseau de multiples taches de lumière d'échantillon (501) dans une chambre d'échantillon (303) contenant le matériau d'échantillon ;
b) la mesure de la lumière d'entrée (504) qui se propage au-delà des taches de lumière d'échantillon (501) ;
c) la mesure de la lumière de signal (500) qui est générée dans la chambre d'échantillon (303),
d) la mise en référence de la quantité mesurée de la lumière de signal avec la quantité mesurée de la lumière d'entrée pour les taches de lumière d'échantillon.

**13.** Procédé selon la revendication 12, **caractérisé en ce que** la lumière d'entrée (504) stimule la fluorescence (500) du matériau d'échantillon.

**14.** Procédé selon la revendication 12, **caractérisé en ce que** la lumière de signal (500) est mesurée à l'extérieur du chemin optique de la lumière d'entrée (504).

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02097406 A1
- EP 1283416 A2
- WO 9734171 A
- WO 9427137 A
- WO 02059583 A1

### Non-patent literature cited in the description

- **LOHMANN et al.** *APPLIED OPTICS,* 1990, vol. 29, 4337-4340
- **MASHANOV et al.** *METHODS,* 2003, vol. 29, 142-152
- **R.M. JENKINS et al.** *Appl. Phys. Lett.,* 1994, vol. 64, 684
- **M. BACHMAN et al.** *Appl. Opt.,* 1994, vol. 33, 3905
- **L.B. SOLDANO ; E.C.M. PENNINGS.** *J. Lightwave Technol.,* 1995, vol. 13, 615
- **A.W. LOHMANN ; J.A. THOMAS.** *Appl. Opt.,* 1990, vol. 29, 4337
- **W. KLAUS ; Y. ARIMOTO ; K. KODATE.** *Appl. Opt.,* 1998, vol. 37, 4357
- **J.W. GOODMAN.** Fourier Optics. McGraw-Hill, 1996